# DEMANDE DE BREVET EUROPEEN

(11) **EP 4 775 866 A1**
(43) Date de publication de la demande: **15.07.2026**
(21) Numéro de dépôt: 26151265.1
(22) Date de dépôt: 12.01.2026
(51) Int. Cl.: F16L 55/40, B23D 79/02, F16L 101/10

(54) **MODULE OUTIL POUR ROBOT PORTEUR ET PROCÉDÉ D'USINAGE MIS EN OEUVRE PAR LE MODULE OUTIL**

(30) Priorité: 13.01.2025 FR 2500322
(71) Demandeur: BOUYGUES CONSTRUCTION EXPERTISES NUCLEAIRES, 78280 Guyancourt (FR)
(72) Inventeur: SEMBLAT, Marc, 69490 Vindry-sur-Turdine (FR); MULLER, Elodie, 69490 Vindry-sur-Turdine (FR)
(74) Mandataire: Regimbeau

(57) **Abrégé**

La présente invention concerne un module outil (700) d'un robot porteur (100) inséré dans une première conduite (1), le module outil (700) comprenant un corps rotatif (701) s'étendant selon un axe d'extension (C), un dispositif de centrage (60) et un outil (70) faisant saillie du corps rotatif (701), le dispositif de centrage (60) comprenant :
- deux galets de référence (71) mobiles entre :
- une position repliée ;
- une position déployée dans laquelle chaque galet de référence (71) fait saillie du corps rotatif (701) de sorte à être en appui contre une paroi de la première conduite (1) ;

- un bloc pousseur (80) mobile de sorte à être en appui contre une paroi de la première conduite (1) lorsque le bloc pousseur (80) et les galets de référence (71) sont dans leur position déployée.

## Description

### DOMAINE DE L'INVENTION

L'invention concerne de manière générale le domaine du contrôle et de la maintenance, plus particulièrement la maintenance des conduites, en particulier l'inspection et l'intervention sur les soudures entre les différentes sections des conduites.

A cet effet, elle propose un module outil pour robot porteur comprenant un dispositif de centrage permettant le positionnement radial dans la conduite du module outil et un procédé d'usinage mis en œuvre par ce module outil.

L'invention trouve en particulier avantageusement - mais non limitativement - application pour l'inspection et l'arasage des cordons de soudures des conduites des installations nucléaires.

### ETAT DE LA TECHNIQUE

L'état de la technique connaît des robots porteurs incorporant un ou plusieurs outils d'inspection ou d'intervention utilisés pour contrôler ou agir à l'intérieur d'une conduite. Un tel robot porteur comprend par exemple un élément flexible reliant différents modules, l'élément flexible assurant la communication et l'approvisionnement en énergie des modules. La forme allongée du robot porteur permet de répartir les modules assurant sa mobilité, les fonctions d'inspection ou les fonctions d'intervention dans la longueur de la conduite. Le robot porteur est donc typiquement allongé et d'une masse importante, de l'ordre de plusieurs dizaines de kilogrammes au minimum.

Les outils d'inspections ou d'interventions nécessitent un positionnement précis du module dans la conduite afin d'agir sur la zone désignée. En particulier, la circonférence du module étant nécessairement inférieure à celle de la conduite afin de permettre la circulation du robot porteur, un positionnement radial de l'outil porté par le module est nécessaire. De plus, afin de pouvoir parcourir toute la circonférence de la conduite, le module doit également pouvoir adopter n'importe quelle position angulaire.

### EXPOSE DE L'INVENTION

Un but de la présente invention est de remédier aux inconvénients précités, en proposant un module outil comprenant un dispositif de centrage permettant avec précision tout déplacement radial et angulaire dans la conduite.

A cette fin, l'invention propose un module outil d'un robot porteur inséré dans une première conduite, le module outil comprenant un corps rotatif s'étendant selon un axe d'extension, un dispositif de centrage et un outil faisant saillie du corps rotatif, le dispositif de centrage comprenant :
- deux galets de référence placés sur le corps rotatif, chaque galet de référence s'étendant sur un axe de rotation parallèle à l'axe d'extension du corps rotatif, les galets de référence étant mobiles entre :
   - une position repliée, dans laquelle chaque galet de référence est logé dans le corps rotatif ;
   - une position déployée dans laquelle chaque galet de référence fait saillie du corps rotatif de sorte à être en appui contre une paroi de la première conduite ;
- un bloc pousseur placé à l'opposé des galets de référence sur le corps rotatif et comprenant au moins un galet de roulement s'étendant sur un axe de rotation parallèle à l'axe d'extension, le bloc pousseur étant mobile perpendiculairement à l'axe d'extension entre une position repliée et une position déployée, de sorte que le galet de roulement soit en appui contre une paroi de la première conduite lorsque le bloc pousseur et les galets de référence sont dans leur position déployée.

L'invention est avantageusement complétée par les caractéristiques suivantes, prises isolément ou en l'une de leur configuration techniquement possible :
- chaque galet de référence et galet de roulement comprend deux parties tronconiques reliées entre elles par une partie centrale, un diamètre d'une extrémité de chaque partie tronconique distale de la partie centrale étant supérieur à celui d'une extrémité proximale de l'outil, la partie centrale formant une gorge configurée pour recevoir une soudure de la première conduite ;
- un galet de roulement ou un galet de référence est motorisé, de sorte à permettre la rotation dans la première conduite du module outil lorsque le bloc pousseur et les galets de référence sont dans leur position déployée, la rotation d'un galet de roulement ou d'un galet de référence contre la première conduite entrainant en rotation le corps rotatif ;
- l'outil est une fraise configurée pour arraser une soudure de la première conduite ou une roue abrasive configurée pour polir une soudure de la première conduite ;
- le corps rotatif comprend un vérin configuré pour déplacer le bloc pousseur et un moteur électrique configuré pour déplacer un galet de référence entre leur position repliée et leur position déployée respective ;
- le corps rotatif comprend une centrale inertielle configurée pour mesurer un déplacement angulaire du module outil dans la première conduite ;
- le corps rotatif comprend entre le bloc pousseur et un galet de référence un laser de centrage configuré pour projeter un point lumineux sur la première conduite ;
- le corps rotatif comprend entre le bloc pousseur et un galet de référence une caméra de centrage configurée pour observer la première conduite perpendiculairement au corps rotatif ;
- le corps rotatif est en forme d'ellipsoïde de révolution oblong par rapport à son axe d'extension, de sorte à permettre le déplacement du module outil dans une conduite coudée ;
- le corps rotatif comprend des déflecteurs, les déflecteurs étant disposés de sorte à faire saillie du corps rotatif afin de le protéger ;
- le corps rotatif comprend des premières roulettes de circulation disposées de part et d'autre du bloc pousseur et des deuxièmes roulettes de circulation disposées de part et d'autre de l'outil, les premières roulettes de circulation et les deuxièmes roulettes de circulations étant configurées pour permettre le déplacement du module outil dans la première conduite ;
- les deuxièmes roulettes de circulation sont configurées pour être mobile entre une position de circulation et une position retractée, la position rétractée étant adoptée lorsque le bloc pousseur et les galets de référence sont dans leur position déployée et la position de circulation étant adoptée lorsque le bloc pousseur et les galets de référence sont dans leur position repliée ;
- un module avant, le module avant comprenant :
   - une première extrémité reliée au corps rotatif par une liaison avant souple,
   - une deuxième extrémité comprenant une première caméra,
   - un boudin gonflable disposé entre la première et la seconde extrémité et configuré pour être gonflé et dégonflé de sorte à obturer la première conduite lorsqu'il est gonflé et à adopter une position rentrée dans le module avant lorsqu'il est dégonflé ;
- une bride de connexion reliée au corps rotatif par une liaison arrière, la bride de connexion comprenant une deuxième caméra et un éclairage configurés pour respectivement observer et éclairer le corps rotatif, et une interface configurée pour connecter le module outil à une tête de connexion.

L'invention concerne également un procédé d'usinage mis en œuvre par le module outil, le procédé comprenant les étapes suivantes :
- étape F31 : passage en position déployée des galets de référence ;
- étape F32 : passage en position déployée du bloc pousseur ;
- étape F53a : mise en rotation des galets de roulement et de l'outil dans des sens de rotations opposés de sorte à réaliser un nombre prédéterminé de passes d'ébauche.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
la figure 1 illustre une vue schématique du robot porteur, de différents modules du robot porteur, du guide d'introduction et de l'enrouleur selon un mode de réalisation de l'invention ;
la figure 2 est une vue schématique d'un module outil selon un mode de réalisation de l'invention ;
la figure 3 est une vue schématique de profil d'un module outil selon un mode de réalisation de l'invention ;
la figure 4 est une autre vue schématique de profil du module outil de la figure 3 ;
la figure 5 est une autre vue schématique de profil du module outil de la figure 4 dans une première configuration ;
la figure 6 est une vue schématique de profil du module outil de la figure 5 dans une deuxième configuration ;
la figure 7 est une vue schématique de détail du module outil de la figure 6 inséré dans une conduite ;
la figure 8 illustre les étapes d'un procédé d'usinage effectué par un module outil selon un mode de réalisation de l'invention.

Sur l'ensemble des figures, les éléments similaires portent des références identiques.

### DESCRIPTION DETAILLEE DE L'INVENTION

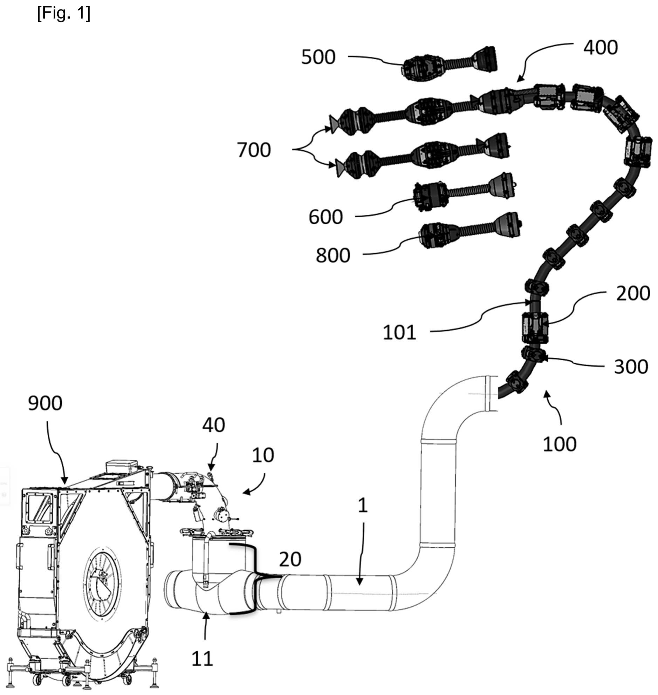

En référence à la figure 1, les inspections et les interventions sur les soudures d'une première conduite **1** sont effectuées par un robot porteur **100** comprenant différents modules. Le robot porteur **100** comprend en particulier un flexible central **101,** des modules moteurs **200,** des modules roues libres **300,** une tête de connexion **400** sur laquelle peut être connectée un module de relevés dimensionnels **500,** un module de ressuage et d'inspection télévisuelle (ITV) **600,** un module outil **700** ou un module de nettoyage **800.** Le flexible central **101** contient les alimentations en air, en eau et en énergie nécessaires à l'alimentation des différents modules **et** assure également la communication des modules entre eux et avec un poste de pilotage.

Le robot porteur **100** est mut par des modules moteurs **200** répartit sur sa longueur. Des modules roues libres **300** assurent également passivement le roulement du robot porteur **100** sur les parois internes de la première conduite **1.**

Les modules de relevés dimensionnels **500,** de ressuage et d'ITV **600** sont des modules d'inspection utilisés pour contrôler l'état de la première conduite **1,** par exemple avant et après l'intervention du module outil **700.** les modules outil **700** et de nettoyage **800** sont des modules d'intervention.

Ces modules sont interchangeables sur la tête de connexion **400.** Les outils d'arasage et de polissage sont typiquement montés sur un même module outil **700** de façon interchangeable.

L'autre extrémité du robot porteur **100** est reliée à un enrouleur **900,** qui assure les interfaces nécessaires entre le flexible central **101,** le poste de pilotage et les équipements nécessaires, par exemple une pompe haute pression assurant l'alimentation en eau, des compresseurs pour l'alimentation en air et une pompe d'alimentation en produits de ressuage. L'enrouleur **900** permet aussi le stockage dans un volume réduit du robot porteur **100.**

L'introduction du robot porteur **100** dans la première conduite **1** voulue à partir de l'enrouleur **900** est facilitée par l'utilisation d'un guide d'introduction **10,** également appelé chistera.

### Module outil

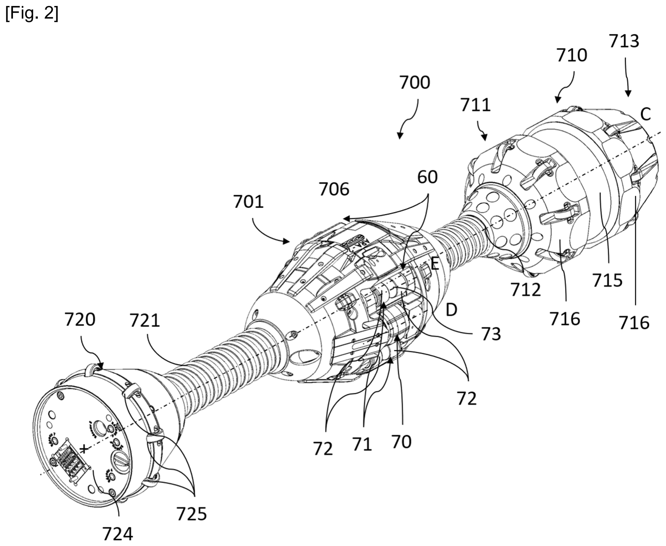

En référence aux figures 2 à 7, le module outil **700** comprend un corps rotatif **701** central s'étendant sur un axe **C,** le corps rotatif **701** portant l'outil **70** et un dispositif de centrage **60.** Le module outil **700** comprend également un module avant **710** et une bride de connexion **720** situés respectivement en aval et en amont du corps rotatif **701** dans la première conduite **1** et reliés respectivement au corps rotatif **701** par une liaison avant **712** et une liaison arrière **721.**

On décrira dans ce qui suit le cas où l'outil **70** est une fraise configurée pour arraser un cordon d'une soudure **5** de la première conduite **1,** ou une roue abrasive configurée pour polir un cordon de soudure **5** de la première conduite **1,** après un arasage notamment. Cependant, l'outil **70** peut aussi être un ensemble de relevés dimensionnels **90,** bien que préférentiellement un tel ensemble est monté sur un module de relevés dimensionnels **500** décrit plus loin.

L'outil **70** a une forme de cylindre dont les arrêtes sont arrondies, afin de réduire les frottements contre la première conduite **1** lors du déplacement du module outil **700,** en particulier dans le cas où il faut faire franchir au module outil **700** la limite entre deux sections distinctes de la première conduite **1** désalignées, par exemple lorsqu'une section rectiligne débouche sur un virage, qu'un virage débouche sur un autre virage ou toute autre configuration de ce type.

Une fraise d'arasage comprend préférentiellement un acier rapide (High Speed Steel HSS dans la terminologie anglo-saxonne). Pour une opération de polissage, la roue abrasive est par exemple une roue à lamelle comprenant un abrasif à grain fin comme le carbure de silicium.

Le corps rotatif **701** comprend une broche rotative sur laquelle est montée l'outil **70** de façon amovible, la broche étant entrainée en rotation par un moteur préférentiellement pneumatique. Un circuit pneumatique peut également être configuré pour refroidir l'outil **70.** L'outil **70** comprend également au moins un canal d'aspiration configuré pour aspirer les débris produits lors de l'opération d'arasage.

Une fois le robot porteur **100** dans une position voulue de la première conduite **1,** c'est-à-dire sur un cordon de soudure **5,** le corps rotatif central **701** va positionner l'outil **70** au contact de la surface interne de la première conduite **1** grâce au dispositif de centrage **60.** Le dispositif de centrage **60** de l'invention permet également de mettre en rotation le corps rotatif central **701** afin d'effectuer des passes avec l'outil **70** sur toute la circonférence de la première conduite **1.** Par « cordon » de soudure **5,** on entend l'accumulation de matière interne à la conduite sur un périmètre interne de celle-ci, ce cordon étant formé à la suite de la soudure **5** de deux sections distinctes de la première conduite **1.** On utilisera indifféremment le terme « soudure » pour désigner ce cordon.

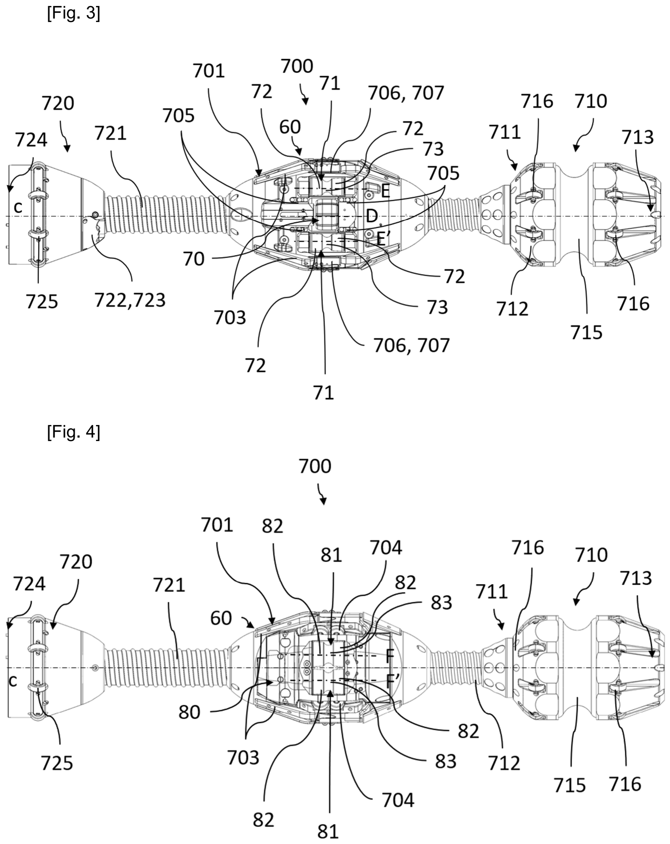

Ainsi, en référence à la figure 3, le dispositif de centrage **60** comprend deux galets de référence **71** placés préférentiellement de part et d'autre de l'outil **70** sur le corps rotatif **701.** Chaque galet de référence **71** s'étend sur un axe de rotation **E, E'** parallèle à un axe de rotation **D** de l'outil **70.** Chaque galet de référence **71** est configuré pour s'adapter à la géométrie de la zone entourant la soudure **5** de la première conduite **1.** A ce titre, chaque galet de référence **71** comprend deux parties tronconiques **72** reliées entre elles par une partie centrale **73.** Le diamètre d'une extrémité de chaque partie tronconique **72** distale de la partie centrale **73** est supérieur à celui d'une extrémité proximale de la partie centrale **73.** La partie centrale **73** forme une gorge configurée pour recevoir une soudure **5** de la première conduite **1.** Un galet de référence **71** a donc une forme de diabolo ou de sablier, la partie centrale **73** étant un hyperboloïde. Alternativement, lorsque la zone entourant la soudure **5** présente une géométrie différente, les galets de référence **71** peuvent être différents et comprendre par exemple une forme cylindrique.

De plus, les galets de référence **71** sont mobiles entre une position repliée, dans laquelle chaque galet de référence **71** est logé dans le corps rotatif **701** et une position déployée dans laquelle chaque galet de référence **71** fait saillie du corps rotatif **701** de sorte à être en appui contre une paroi de la première conduite **1.** Avantageusement, le corps rotatif **701** comprend pour chaque galet de référence **71** un vérin **702** configuré pour le déplacer de la position repliée à la position déployée, de préférence actionné par un moteur électrique. Alternativement, le vérin **702** est un vérin pneumatique simple action. Avantageusement, un embrayage pneumatique est intégré sur la transmission entre le moteur électrique et une vis à billes qui fait translater les galets de référence **71.** En cas d'absence d'air comprimé, la transmission est débrayée, et des ressorts de rappel ramènent automatiquement les galets de référence **71** en position rétractée.

Bien entendu, la position déployée correspond à un ensemble de positions dans lesquelles chaque galet de référence **71** est plus ou moins étendu par rapport à la position repliée. On distinguera en particulier une position d'extension maximale des galets de référence **71.** Les galets de références **71** sont préférentiellement maintenus en position repliée lors du déplacement du robot porteur **100** et en position déployée lorsque le corps rotatif **701** est en position au niveau du cordon de soudure **5.**

D'autre part, comme illustré figure 4, le dispositif de centrage **60** comprend un bloc pousseur **80** placé à l'opposé des galets de référence **71** sur le corps rotatif **701.** Le bloc pousseur **80** comprend au moins un galet de roulement **81** s'étendant sur un axe de rotation **F, F'** parallèle à l'axe d'extension **C.** Préférentiellement, les galets de roulement **81** sont de même forme que les galets de référence **71.** Ainsi, chaque galet de roulement **81** comprend deux parties tronconiques **82** reliées entre elles par une partie centrale **83.** Le diamètre d'une extrémité de chaque partie tronconique **82** distale de la partie centrale **83** est supérieur à celui d'une extrémité proximale de la partie centrale **83.** La partie centrale **83** forme une gorge configurée pour recevoir un cordon de soudure **5** de la première conduite **1.** Un galet de roulement **81** a donc de préférence une forme de diabolo ou de sablier, la partie centrale **83** étant un hyperboloïde. Là encore, les galets de roulement **81** peuvent avoir une forme différente pour s'adapter au cordon de soudure **5,** par exemple une forme cylindrique.

Avantageusement, le bloc pousseur **80** comprend deux galets de roulement **81** afin d'augmenter la surface de contact avec la première conduite **1.** En effet, le bloc pousseur **80** est mobile perpendiculairement à l'axe d'extension **C** entre une position repliée et une position déployée, de sorte que les galets de roulement **81** soient en appuis contre la paroi de la première conduite **1** lorsque le bloc pousseur **80** et les galets de référence **71** sont dans leur position déployée. Le corps rotatif **701** comprend un vérin **702** configuré pour déplacer le bloc pousseur **80** de la position repliée à la position déployée, de préférence un vérin **702** à simple action et pneumatique. Bien entendu, la position déployée comprend un ensemble de positions dans lesquelles le bloc pousseur **80** est plus ou moins étendu par rapport à la position repliée. On distinguera en particulier une position d'extension maximale du bloc pousseur **80.** En position déployée, le bloc pousseur **80** exerce un effort sur la paroi de la première conduite **1** de sorte à plaquer les galets de références **71** sur la paroi, afin d'empêcher toute translation du corps rotatif **701** vers l'amont ou l'aval de la première conduite **1** lors de la rotation du corps rotatif **701** et de l'outil **70.**

Le bloc pousseur **80** comprend également un motoréducteur intégré et configuré pour actionner les galets de roulement **81** afin d'entrainer en rotation sur l'axe **C** l'ensemble du corps rotatif **701** dans la première conduite **1.** Alternativement, le motoréducteur peut être intégré hors du bloc pousseur 80 dans le corps rotatif **701** et actionne alors au moins l'un des galets de référence **71** afin d'entrainer en rotation le corps rotatif **701.** Le motoréducteur est dimensionné pour contrer les efforts engendrés par la rotation de l'outil **70.** Le motoréducteur comprend préférentiellement un moteur électrique à courant continu ou sans balai asservi et un capteur de fin de course. Les galets de roulement **81** comprennent un matériau configuré pour être antidérapant, par exemple du polyuréthane. Les galets de références **71** comprennent de préférence un matériau rigide ayant une capacité de compression faible afin de garantir la précision du positionnement de l'outil **70,** par exemple le polyamide.

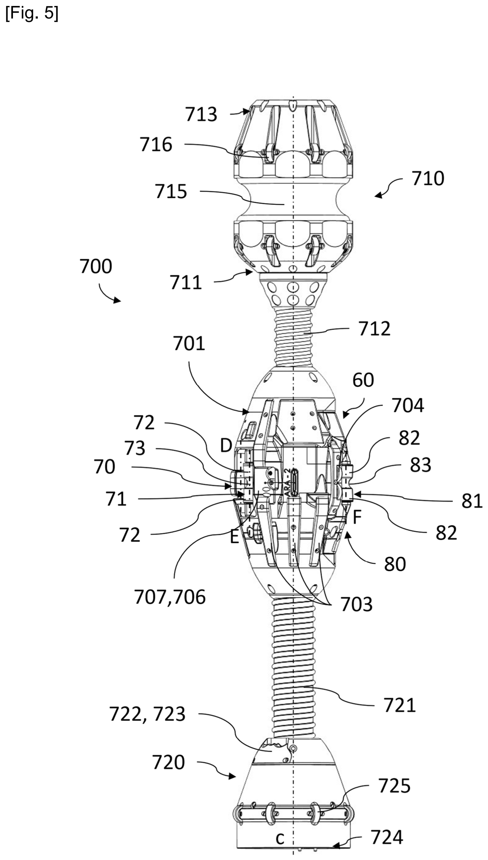

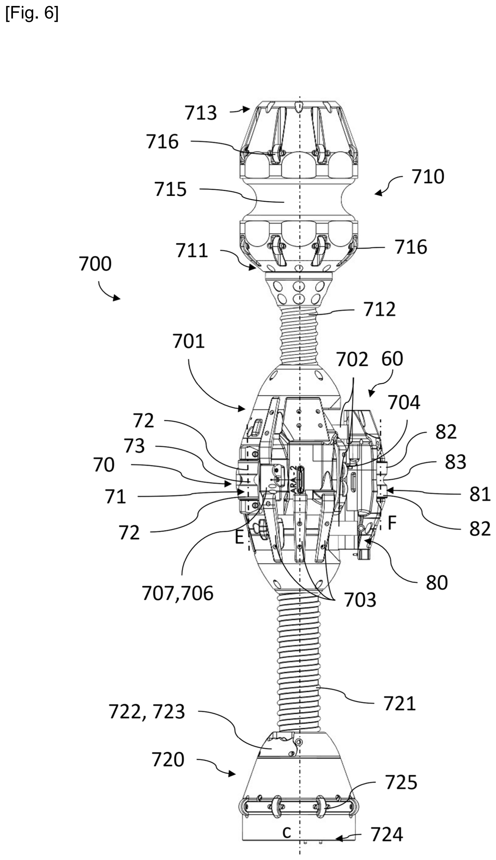

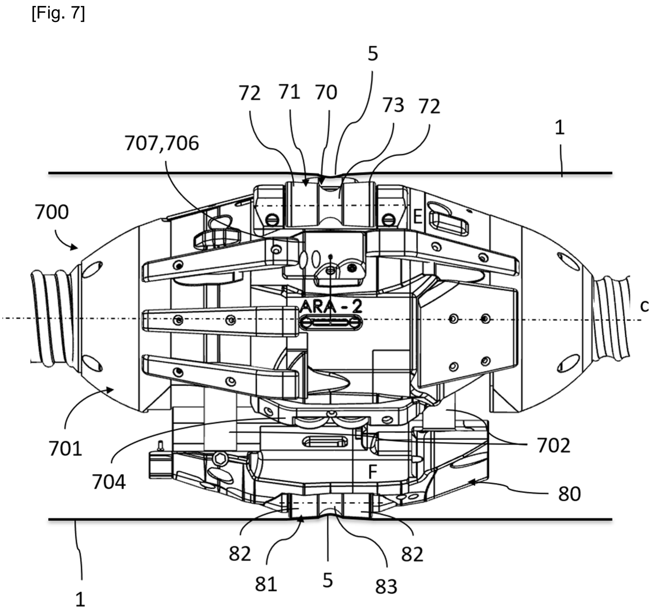

Les galets de références **71** et le bloc pousseur **80** sont en position repliée lors du déplacement du robot porteur **100** dans la première conduite **1,** comme illustré figure 5. Une fois le corps rotatif **701** du module outil **700** aligné avec le cordon de soudure **5** voulu, les galets de références **71** et le bloc pousseur **80** sont placés en position déployée, par exemple par des vérins **702,** comme illustré figures 6 et 7. La forme des galets de référence **71** permet de centrer l'outil **70** par rapport à la soudure **5** alignant cette dernière avec la partie centrale **73.**

En effet, de part et d'autre de chaque soudure **5** se trouve une réduction du diamètre de la première conduite **1,** créée lors de la réalisation de la soudure **5.** Autrement dit, la première conduite présente une section tronconique ou des creux inclinés de part et d'autre du cordon de soudure **5.** Les extrémités de chaque partie tronconique **72** distales de la partie centrale **73** sont configurées pour parcourir ces réductions au cours de la rotation du corps rotatif **701,** afin de guider l'outil **70** de sorte à ce qu'il suive la soudure **5.** Lors du passage de la position rétractée à la position déployée, les galets de référence **71** et les galets de roulement **81** vont venir insérer mécaniquement l'extrémité de chaque partie tronconique **72, 82** distale de la partie centrale **73, 83** dans les réductions de part et d'autre du cordon de soudure **5.**

La variation de l'extension des vérins **702** et donc de la distance entre le corps rotatif **701,** les galets de références **71** et le bloc pousseur **80** permet de faire varier radialement la position dans la première conduite **1** du corps rotatif **701.** Cela est particulièrement utile pour positionner l'outil **70** dans la première conduite **1,** par exemple pour régler une profondeur de passe lorsque l'outil **70** est une fraise ou une pression d'appui lorsque l'outil **70** est une roue abrasive.

Le corps rotatif **701** est préférentiellement en forme d'ellipsoïde de révolution oblong par rapport à l'axe **C** lorsque le bloc pousseur **80** est en position repliée. Cette forme permet un déplacement plus aisé du module outil **700** dans la première conduite **1** et permet notamment le passage de liaison coudée, y compris des liaisons coudées successives, c'est-à-dire un virage débouchant directement sur un autre virage. De plus, les frottements sont réduits lorsque le module outil **700** passe entre deux portions de la première conduite **1** désalignés.

Enfin, cette forme permet l'intervention sur un cordon de soudure **5** entre deux coudes, ou entre une section droite et un coude de la première conduite **1.** En effet, les galets de référence **71** vont épouser la surface interne de la première conduite **1** et ainsi suivre son inclinaison lors de la rotation du corps rotatif **701,** ce qui permet, lors des passes successives de l'outil **70** de raccorder parfaitement les surfaces en amont et en aval du cordon de soudure **5** et donc de ne jamais former de zone concave ou de forme « en escalier » au niveau de ce cordon de soudure **5.**

Les extrémités du corps rotatif **701** comprennent respectivement la liaison avant **712** et la liaison arrière **721** et apparaissent donc tronquées.

L'équateur du corps rotatif **701,** autrement dit le périmètre le plus large du corps rotatif **701** inscrit dans un plan perpendiculaire à l'axe **C,** comprend le dispositif de centrage **60** et l'outil **70.** Plus précisément, les centres respectifs de l'outils 70, des galets de référence **71** et des galets de roulement **81** appartiennent respectivement aux axes de rotations **D, E, E', F et F'** et à l'équateur du corps rotatif **701.** Autrement dit, en position repliée des galets de référence **71** et du bloc pousseur **80,** les centres des parties centrales **73** et **83** ne font pas saillie du corps rotatif **701.** De part et d'autre de l'équateur du corps rotatif **701,** le module outil **700** comprend des déflecteurs **703** disposés de sorte à faire saillie du corps rotatif **701** afin de le protéger. Ces déflecteurs **703** sont préférentiellement des lamelles réparties sur le pourtour du corps rotatif **701** en l'amont et en aval de l'équateur, afin d'absorber les chocs et les frottements au cours du déplacement du robot porteur **100.** Les déflecteurs **703** sont avantageusement amovibles afin de pouvoir être changés lorsqu'ils sont endommagés.

Afin d'encore faciliter la circulation du module dans la première conduite **1,** le corps rotatif **701** comprend en outre des premières roulettes de circulation **704** disposées de part et d'autre du bloc pousseur **80** et des deuxièmes roulettes de circulation **705** disposées de part et d'autre de l'outil **70.** Les deuxièmes roulettes de circulation **705** sont préférentiellement disposées une paire en amont et une paire en aval de l'outil **70,** radialement entre chaque galet de référence **71** et l'outil **70.** Les premières roulettes de circulation **704** comprennent deux paires de roues libres placées sur l'équateur du corps rotatif **701** et les deuxièmes roulettes **705** de circulations comprennent quatre roues libres encadrant l'outil **70.** Avantageusement, les deuxièmes roulettes de circulation **705** sont mobiles entre une position de circulation et une position rétractée.

En position de circulation, les deuxièmes roulettes de circulation **705** sont configurées pour permettre le déplacement du module outil **700** dans la première conduite **1.** En particulier, les deuxièmes roulettes de circulation **705** encadrent l'outil **70** afin d'empêcher le contact entre l'outil **70** et la paroi de la première conduite **1.**

Dans la position rétractée, qui est adoptée lorsque le bloc pousseur **80** et les galets de référence **71** sont dans leur position déployée, les deuxièmes roulettes de circulation **705** sont rentrées à l'intérieur du corps rotatif **701** afin de permettre à l'outil **70** d'entrer en contact avec la paroi de la première conduite **1.**

Avantageusement, le corps rotatif **701** comprend en outre une centrale inertielle configurée pour mesurer un déplacement angulaire du module outil **700** dans la première conduite **1.** Ainsi, il est possible de connaitre la position du corps rotatif **701** et en particulier de l'outil **70** lorsque le corps rotatif **701** est en rotation sous l'action des galets de roulement **81.** Le mouvement de rotation du corps rotatif **701** est alors asservi de manière à effectuer sur la soudure **5** un nombre prédéterminé de passes de l'outil **70,** dans un sens et avec une vitesse sélectionnée. 5

De plus, le corps rotatif **701** peut comprendre une caméra de centrage **707** et/ou un laser de centrage **706,** avantageusement deux paires de laser de centrage **706** et de caméra de centrage **707** positionnés à proximité de chaque galet de référence **71.** Préférentiellement, la caméra de centrage **707** et/ou le laser de centrage **706** sont alignés avec les centres de l'outils **70,** des galets de référence **71** et des galets de roulement **81.** Ainsi, la caméra de centrage **707** et/ou le laser de centrage **706** peuvent être utilisé pour rechercher la soudure **5** et lorsqu'elle est alignée avec l'axe optique, le déplacement du module outil **700** peut être stoppé. Chaque laser de centrage **706** est configuré pour projeter un point visible par la caméra de centrage **707** sur la surface interne de la première conduite **1,** afin de servir de repère visuel à l'opérateur. Préférentiellement, la caméra de centrage **707** comprend un éclairage.

Chaque caméra de centrage **707** permet de visualiser la soudure **5** lors du déplacement du robot porteur **100** afin de positionner le module outil **700** par rapport à la soudure **5** avant de faire passer les galets de référence **71** et le bloc pousseur **80** de leur position repliée à la position déployée. D'autre part, la caméra de centrage **707** permet également de contrôler les opérations d'arasage ou de polissage en inspectant visuellement la soudure **5.**

Le module avant **710** est situé à l'aval du corps rotatif **701** et est relié à celui-ci par une liaison avant **712** souple qui s'étend depuis une première extrémité **711.** La liaison avant **712** est un flexible muni de vertèbre, souple en courbure mais rigide en compression, raccordant le module avant **710** avec le corps rotatif **701** afin de permettre le passage de l'outil dans les coudes de la tuyauterie. La liaison avant **712** permet également de faire passer des utilités pneumatiques et électriques. Afin de permettre ces connexions avec le corps rotatif **701,** la liaison avant **712** comprend un collecteur pneumatique tournant.

La première extrémité **711** comprend un profil circulaire et un diamètre qui s'accroit progressivement à partir de la liaison avant **712,** par exemple une forme tronconique ou d'entonnoir afin de faciliter le déplacement du robot porteur **100.** Dans le même objectif, la première extrémité **711** comprend sur sa surface externe un ensemble de roues libres **716** réparties sur toute la circonférence de sorte à réduire les frottements.

Le module avant **710** comprend également une seconde extrémité **713** comprenant également un ensemble de roues libres **716** et une première caméra **714.** La seconde extrémité a préférentiellement une forme tronconique afin de passer les liaisons coudées de la première conduite **1.** La première caméra **714** fait face à l'aval et est configurée pour acquérir des images de la première conduite **1** lors du déplacement du robot porteur **100.** Avantageusement, la première caméra **714** comprend un éclairage.

Entre la première extrémité **711** et la seconde extrémité **713** s'étend un boudin **715** gonflable configuré pour être gonflé et dégonflé. Lorsqu'il est dégonflé, le boudin **715** est stocké de façon à adopter une forme de gorge, autrement dit d'un hyperboloïde, c'est-à-dire qu'il adopte une forme rentrante afin d'éviter tout endommagement du boudin lors du déplacement du robot porteur **100** dans la première conduite **1.** Lorsqu'il est gonflé, le boudin **715** a un diamètre suffisant pour obturer la première conduite **1** afin de l'isoler du module outil **700** et des particules générées par les opérations d'arasage et/ou de polissage.

La bride de connexion **720** est reliée au corps rotatif **701** par une liaison arrière **721.** La liaison arrière **721** est un flexible muni de vertèbre, souple en courbure mais rigide en compression, raccordant la bride de connexion **720** avec le corps rotatif **701** afin de permettre le passage du module outil **700** dans les coudes de la tuyauterie. La liaison arrière **721** permet également de faire passer des utilités pneumatiques et électriques, ainsi que les flexibles d'aspiration pour le canal d'aspiration de l'outil **70.** Afin de permettre ces connexions avec le corps rotatif **701,** la liaison arrière **721** comprend un collecteur tournant.

La bride de connexion **720** comprend une deuxième caméra **722** et un éclairage **723** configurés pour respectivement observer et éclairer le corps rotatif **701** de sorte à pouvoir contrôler les opérations d'usinage et les changements de positions des galets de référence **71** et du bloc pousseur **80.** La bride de connexion **720** comprend aussi une interface **724** configurée pour connecter le module outil **700** à une tête de connexion **101.** L'interface **724** permet d'assurer les connexions en air, en électricité et toute autre servitude nécessaire entre le module outil **700** et le reste du robot porteur **100.**

### Procédé d'usinage

Le module outil **700** décrit précédemment permet la mise en œuvre d'un procédé d'usinage de la première conduite **1.** On décrira par la suite le procédé dans le cadre de l'arasage d'une soudure **5** présente sur une circonférence entre deux sections de la première conduite **1,** c'est-à-dire que l'outil **70** est une fraise d'arasage configurée pour effectuer des passes le long de la soudure **5** afin de retirer de la matière, mais ce procédé est applicable au polissage et à tout autre type d'opération.

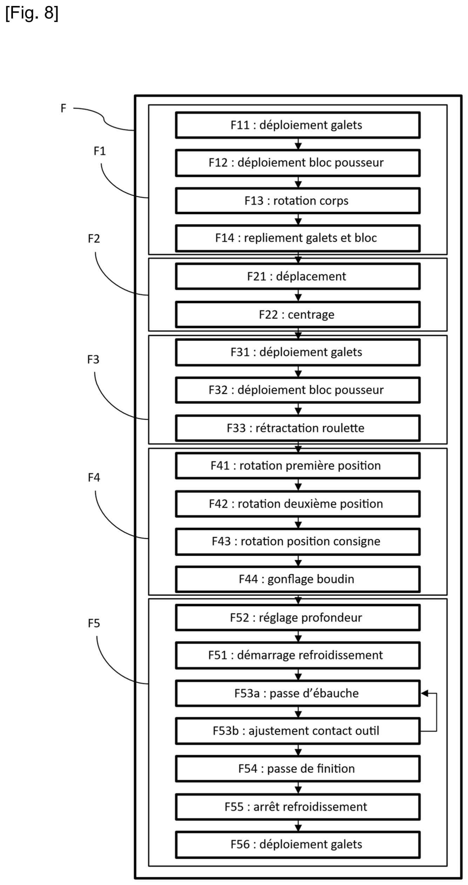

En référence à la figure 8, le procédé d'usinage **F** comprend une phase de positionnement **F1** de l'outil **70,** une phase de déplacement **F2,** une phase de bridage **F3,** une phase d'initialisation **F4** et une phase d'usinage **F5.**

La phase de positionnement F1 a pour but de placer l'outil **70** dans une position qui permette le déplacement du robot porteur **100** dans la première conduite **1** sans endommagement de l'outil **70.** Dans cette position, l'outil **70** est placé en génératrice supérieure de la première conduite **1,** autrement dit lorsque la première conduite est horizontale par rapport au sol, le module outil **700** est orienté pour que l'outil **70** soit à un point distal du sol. Pour atteindre ce but, la phase de positionnement F1 comprend les étapes suivantes :
- déploiement des galets de référence **71** (étape F11) et du bloc pousseur **80** (étape F12) de leur position repliée à leur position déployée respective ;
- mise en rotation des galets de roulements **81** afin de mettre en rotation le corps rotatif **701** jusqu'à atteindre la position angulaire désirée de l'outil **70,** la position angulaire étant mesurée en continu par la centrale inertielle et comparée avec la position désirée, de sorte que la rotation des galets de roulements **81** est stoppée lorsque la position angulaire est égale à la position angulaire désirée (étape F13) ;
- mise en position repliée des galets de référence **71** du bloc pousseur **80** (étape F14).

La phase de positionnement F2 vise à positionner l'outil **70** en vis-à-vis de la soudure **5,** de sorte que la rotation du corps rotatif **701** fasse passer l'outil sur toute la circonférence de la soudure **5.** La phase de positionnement F2 comprend les étapes suivantes :
- déplacement du module outil **700** vers l'amont ou vers l'aval en utilisant les caméras de centrage **707** et/ou les lasers de centrage **706** et/ou la deuxième caméra **722** afin d'approcher le corps rotatif **700** du cordon de soudure **5** (étape F22) ;
- centrage de l'outil **70** sur le cordon de soudure **5** et arrêt du déplacement lorsque l'outil **70** est aligné avec le cordon de soudure **5,** préférentiellement lorsque le rayon du laser de centrage **706** est positionné au centre du cordon de soudure **5** (étape F23).

Une fois le corps rotatif **701** du module outil **700** en position, la phase de bridage **F3** peut être effectuée afin d'empêcher toute translation du corps rotatif **701** dans la première conduite **1.** La phase de bridage **F3** comprend les étapes suivantes :
- passage en position déployée des galets de référence **71,** de sorte à les placer à l'extension maximale possible de leur position déployée, l'extrémité de chaque partie tronconique **72** distale de la partie centrale **73** étant insérée dans les réductions de diamètre de la première conduite **1** de part et d'autre du cordon de soudure **5,** les parties centrales **73** et l'outil **70** étant en vis-à-vis du cordon de soudure **5** (étape F31) ;
- passage en position déployée du bloc pousseur **80,** l'extrémité de chaque partie tronconique **82** distale de la partie centrale **83** des galets de roulement **81** étant insérée dans les réductions de diamètre de la première conduite **1** de part et d'autre du cordon de soudure **5,** les parties centrales **73** et l'outil **70** étant en vis-à-vis du cordon de soudure **5** (étape F32) ;
- rétractation des roulettes de circulations **705** du corps rotatif **701** (étape F33).

La phase d'initialisation F4 permet de préparer le module outil **700** à la phase d'usinage F5, d'isoler l'aval de la première conduite **1** et comprend les étapes suivantes :
- rotation du corps rotatif **701** de sorte que l'outil **70** atteigne une première position angulaire correspondant à un premier contact du capteur de fin de course, c'est-à-dire que dans la première position angulaire, le capteur de fin de course renvoie une valeur prédéterminée associée à un angle égal à celui de la première position angulaire, par exemple 0° (étape F41) ;
- rotation du corps rotatif **701** de sorte que l'outil **70** atteigne une deuxième position angulaire correspondant à un deuxième contact du capteur de fin de course, c'est-à-dire que dans la deuxième position angulaire le capteur de fin de course renvoie une valeur prédéterminée associée à un angle égal à celui de la deuxième position angulaire, par exemple 720° (étape F42). Autrement dit, après avoir déterminé sa position lors de l'étape F41, le corps rotatif **701** effectue deux tours complets sur son axe de rotation **C,** afin de permettre aux galets de référence **71** et aux galets de roulement **81** de se positionner de part et d'autre du cordon de soudure **5** ;

- rotation du corps rotatif **701** jusqu'à ce que l'outil **70** atteigne une position angulaire de consigne prédéterminée (étape F43) ;
- gonflage du boudin **715** du module avant **710,** le boudin épousant toute la circonférence de la première conduite **1** afin d'isoler l'aval de la première conduite **1** des résidus produits par l'usinage (étape F44).

La phase d'usinage F5 comprend les étapes suivantes :
- réglage de la profondeur d'usinage, la profondeur d'usinage étant une distance entre l'outil **70** et la surface de la première conduite **1,** déterminée lorsque les galets de référence **71** sont étendus au maximum possible de leur position déployée à partir de l'angle des réductions de diamètre de la première conduite **1** de part et d'autre du cordon de soudure **5** et d'une largeur du cordon de soudure **5,** l'angle respectif des réductions de diamètre de la première conduite **1** de part et d'autre du cordon de soudure **5** et la largeur du cordon de soudure **5** étant avantageusement déterminés par le module de relevés dimensionnels **500** (étape F51), les galets de références **71** étant déployés dans une position dans laquelle l'outil **70** est au contact du cordon de soudure **5** ;
- démarrage du refroidissement de l'outil **70** (étape F52) ;
- mise en rotation du corps rotatif **701** par les galets de roulement **81** et de l'outil **70** dans des sens de rotations opposés, de sorte à réaliser un nombre prédéterminé de passes d'ébauche dans lesquelles l'outil **70** travaille en opposition (étape F53a) ;
- modification de la position des galets de références **71** et/ou du bloc pousseur **80** afin de maintenir le contact entre le cordon de soudure **5** et l'outil **70** (étape F53b), de préférence entre deux passes d'ébauche, par exemple selon un intervalle régulier de rotations du corps rotatif **701** (c'est-à-dire entre deux étapes F53a). Les étapes F53a et F53b sont donc effectuées de manière itérative ;
- inversion du sens de rotation sur l'axe **E** de l'outil **70** ou du sens de rotation du corps rotatif **701** sur l'axe **C,** de sorte à réaliser une passe de finition (étape F54) dans laquelle l'outil **70** travaille en avalant avant l'arrêt de la rotation du corps rotatif **701** et de l'outil **70** ;
- arrêt du refroidissement de l'outil **70** (étape F55) ;
- passage en position déployée des galets de référence **71** à l'extension maximale possible de leur position déployée (étape F56).

Le module outil **700** selon le présent exposé permet ainsi un gain de temps et de précision sur les opérations d'inspections et d'intervention, et à ce titre est particulièrement adapté aux opérations sur tout type de conduites, par exemple celles appartenant au circuit d'injection de sécurité (RIS) d'une installation nucléaire.

## Revendications

1. Module outil (**700**) d'un robot porteur (**100**) inséré dans une première conduite (**1**), le module outil (**700**) comprenant un corps rotatif (**701**) s'étendant selon un axe d'extension (**C**), un dispositif de centrage (**60**) et un outil (**70**) faisant saillie du corps rotatif (**701**), le dispositif de centrage (**60**) comprenant :
- deux galets de référence (**71**) placés sur le corps rotatif (**701**), chaque galet de référence (**71**) s'étendant sur un axe de rotation (**E**) parallèle à l'axe d'extension (**C**) du corps rotatif (**701**), les galets de référence (**71**) étant mobiles entre :
- une position repliée, dans laquelle chaque galet de référence (**71**) est logé dans le corps rotatif (**701**) ;
- une position déployée dans laquelle chaque galet de référence (**71**) fait saillie du corps rotatif (**701**) de sorte à être en appui contre une paroi de la première conduite (**1**) ;
- un bloc pousseur (**80**) placé à l'opposé des galets de référence (**71**) sur le corps rotatif (**701**) et comprenant au moins un galet de roulement (**81**) s'étendant sur un axe de rotation (**F**) parallèle à l'axe d'extension (**C**), le bloc pousseur (**80**) étant mobile perpendiculairement à l'axe d'extension (**C**) entre une position repliée et une position déployée, de sorte que le galet de roulement (**81**) soit en appui contre une paroi de la première conduite (**1**) lorsque le bloc pousseur (**80**) et les galets de référence (**71**) sont dans leur position déployée.

2. Module outil (**700**) selon la revendication 1, dans lequel chaque galet de référence (**71**) et galet de roulement (**81**) comprend deux parties tronconiques (**72, 82**) reliées entre elles par une partie centrale (**73, 83**), un diamètre d'une extrémité de chaque partie tronconique (**72, 82**) distale de la partie centrale (**73, 83**) étant supérieur à celui d'une extrémité proximale de l'outil (**70**), la partie centrale (**73, 83**) formant une gorge configurée pour recevoir une soudure (**5**) de la première conduite (**1**).

3. Module outil (**700**) selon l'une des revendications 1 et 2, dans lequel un galet de roulement (**81**) ou un galet de référence (**71**) est motorisé, de sorte à permettre la rotation dans la première conduite du module outil (**700**) lorsque le bloc pousseur (**80**) et les galets de référence (**71**) sont dans leur position déployée, la rotation d'un galet de roulement (**81**) ou d'un galet de référence (**71**) contre la première conduite (**1**) entrainant en rotation le corps rotatif (**701**).

4. Module outil (**700**) selon l'une des revendications 1 à 3, dans lequel l'outil (**70**) est une fraise configurée pour arraser une soudure (**5**) de la première conduite (**1**) ou une roue abrasive configurée pour polir une soudure (**5**) de la première conduite (**1**).

5. Module outil (**700**) selon l'une des revendications 1 à 4, dans lequel le corps rotatif (**701**) comprend un vérin (**702**) configuré pour déplacer le bloc pousseur (**80**) et un moteur électrique configuré pour déplacer un galet de référence (**71**) entre leur position repliée et leur position déployée respective.

6. Module outil (**700**) selon l'une des revendications 1 à 5, comprenant en outre une centrale inertielle configurée pour mesurer un déplacement angulaire du module outil (**700**) dans la première conduite (**1**).

7. Module outil (**700**) selon l'une des revendications 1 à 6, dans lequel le corps rotatif (**701**) comprend entre le bloc pousseur (**80**) et un galet de référence (**71**) un laser de centrage (**706**) configuré pour projeter un point lumineux sur la première conduite (**1**).

8. Module outil (**700**) selon l'une des revendications 1 à 7, dans lequel le corps rotatif (**701**) comprend entre le bloc pousseur (**80**) et un galet de référence (**71**) une caméra de centrage (**707**) configurée pour observer la première conduite (**1**) perpendiculairement au corps rotatif (**701**).

9. Module outil (**700**) selon l'une des revendications 1 à 8, dans lequel le corps rotatif (**701**) est en forme d'ellipsoïde de révolution oblong par rapport à son axe d'extension (**C**), de sorte à permettre le déplacement du module outil (**700**) dans une conduite coudée.

10. Module outil (**700**) selon l'une des revendications 1 à 9, dans lequel le corps rotatif (**701**) comprend des déflecteurs (**703**), les déflecteurs (**703**) étant disposés de sorte à faire saillie du corps rotatif (**701**) afin de le protéger.

11. Module outil (**700**) selon l'une des revendications 1 à 10, dans lequel le corps rotatif (**701**) comprend des premières roulettes de circulation (**704**) disposées de part et d'autre du bloc pousseur (**80**) et des deuxièmes roulettes de circulation (**705**) disposées de part et d'autre de l'outil (**70**), les premières roulettes de circulation (**704**) et les deuxièmes roulettes (**705**) de circulations étant configurées pour permettre le déplacement du module outil (**700**) dans la première conduite (**1**).

12. Module outil (**700**) selon l'une des revendications 1 à 11, dans lequel les deuxièmes roulettes de circulation (**705**) sont configurées pour être mobile entre une position de circulation et une position retractée, la position rétractée étant adoptée lorsque le bloc pousseur (**80**) et les galets de référence (**71**) sont dans leur position déployée et la position de circulation étant adoptée lorsque le bloc pousseur (**80**) et les galets de référence (**71**) sont dans leur position repliée.

13. Module outil (**700**) selon l'une des revendications 1 à 12, comprenant un module avant (**710**), le module avant (**710**) comprenant :
- une première extrémité (**711**) reliée au corps rotatif (**701**) par une liaison avant (**712**) souple,
- une deuxième extrémité (**713**) comprenant une première caméra (**714**),
- un boudin (**715**) gonflable disposé entre la première et la seconde extrémité et configuré pour être gonflé et dégonflé de sorte à obturer la première conduite lorsqu'il est gonflé et à adopter une position rentrée dans le module avant (**710**) lorsqu'il (**712**) est dégonflé.

14. Module outil (**700**) selon l'une des revendications 1 à 13, comprenant une bride de connexion (**720**) reliée au corps rotatif (**701**) par une liaison arrière (**721**), la bride de connexion (**720**) comprenant une deuxième caméra (**722**) et un éclairage (**723**) configurés pour respectivement observer et éclairer le corps rotatif (**701**), et une interface (**724**) configurée pour connecter le module outil (**700**) à une tête de connexion (**101**).

15. Procédé d'usinage (**F**) mis en œuvre par le module outil (**700**) selon l'une des revendications 3 à 14, le procédé comprenant les étapes suivantes :
- étape F31 : passage en position déployée des galets de référence (**71**) ;
- étape F32 : passage en position déployée du bloc pousseur (**80**) ;
- étape F53a : mise en rotation des galets de roulement (**81**) et de l'outil (**70**) dans des sens de rotations opposés de sorte à réaliser un nombre prédéterminé de passes d'ébauche.
